(19) Europäisches Patentamt
European Patent Office
Office européen des brevets

(11) **EP 4 472 320 A1**

(12) **EUROPEAN PATENT APPLICATION**
published in accordance with Art. 153(4) EPC

(43) Date of publication:
**04.12.2024 Bulletin 2024/49**

(21) Application number: **23746410.2**

(22) Date of filing: **28.01.2023**

(51) International Patent Classification (IPC):
**H04W 72/04** (2023.01)     **H04W 92/18** (2009.01)
**H04L 5/00** (2006.01)

(52) Cooperative Patent Classification (CPC):
**H04L 1/00; H04L 5/00; H04W 72/04;
H04W 72/0453; H04W 72/53; H04W 74/08;
H04W 92/18**

(86) International application number:
**PCT/CN2023/073600**

(87) International publication number:
**WO 2023/143533 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022  CN 202210106500**

(71) Applicant: **VIVO MOBILE COMMUNICATION CO.,
LTD.
Dongguan, Guangdong 523863 (CN)**

(72) Inventors:
• **JIANG, Lei**
  **Dongguan, Guangdong 523863 (CN)**
• **LI, Gen**
  **Dongguan, Guangdong 523863 (CN)**
• **JI, Zichao**
  **Dongguan, Guangdong 523863 (CN)**

(74) Representative: **Lavoix
Bayerstraße 83
80335 München (DE)**

(54) **SIDELINK TRANSMISSION METHOD, TERMINAL, AND STORAGE MEDIUM**

(57)    This application discloses a sidelink transmission method, a terminal, and a storage medium, and the sidelink transmission method in embodiments of this application includes: A terminal listens for a first resource to obtain a corresponding listening result, and determines, based on the listening result, whether to perform sidelink transmission, where the first resource includes an interlace, and the interlace includes at least one of the following: an interlace determined based on an SL-BWP, an interlace determined based on a carrier, or an interlace determined based on at least one RB set.

FIG. 2

## Description

### CROSS-REFERENCE TO RELATED APPLICATION

This application claims priority to Chinese Patent Application No.202210106500.8 filed on January 28, 2022, which is incorporated herein by reference in its entirety.

### TECHNICAL FIELD

This application belongs to the field of communication technologies, and in particular, to a sidelink transmission method, a terminal, and a storage medium.

### BACKGROUND

Sidelink (sidelink, or interpreted as sidelink, sidelink, or sidelink) transmission is supported in some communication systems, and the sidelink transmission refers to direct transmission between terminals at a physical layer. Currently, the sidelink transmission supports transmission manners such as broadcast, unicast, multicast, and multicast. Currently, however, the sidelink transmission refers to transmission on consecutive resources, resulting in a poor sidelink transmission performance.

### SUMMARY

Embodiments of this application provide a sidelink transmission method, a terminal, and a storage medium, capable of solving a problem that a sidelink transmission performance is poor.

According to a first aspect, embodiments of this application provide a sidelink transmission method, including:

> The terminal listens for a first resource, to obtain a corresponding listening result, and
> determine, based on the listening result, whether to perform sidelink transmission;

The first resource includes an interlace (interlace), and the interlace includes at least one of the following:

> an interlace determined based on a sidelink bandwidth part (sidelink Bandwidth Part, SL-BWP);
> an interlace determined based on a carrier; or
> an interlace determined based on at least one resource block set (Resource block set, RB set).

According to a second aspect, a sidelink transmission apparatus is provided, including:

> a listening module, configured to listen for a first resource, to obtain a corresponding listening result; and
> a determining module, configured to determine, based on the listening result, whether to perform sidelink transmission.

The first resource includes an interlace interlace, and the interlace includes at least one of the following:

> an interlace determined based on an SL-BWP;
> an interlace determined based on a carrier; or
> an interlace determined based on at least one resource block set RB set.

According to a third aspect, a terminal is provided, including a processor and a memory. The memory stores a program or instructions that can be executed on the processor. When the program or instructions are executed by the processor, the steps in the sidelink transmission method provided in an embodiment of this application.

According to a fourth aspect, a terminal is provided including a processor and a communication interface, where the communication interface is configured to listen for a first resource, to obtain a corresponding listening result; and the processor is configured to determine, based on the listening result, whether to perform sidelink transmission. The first resource includes an interlace interlace, and the interlace includes at least one of the following: an interlace determined based on a sidelink bandwidth part SL-BWP; an interlace determined based on a carrier; or an interlace determined based on at least one resource block set RB set.

According to a seventh aspect, an embodiment of this application provides a readable storage medium, storing a program or instructions. When the program or instructions are executed by a processor, the steps of the foregoing sidelink transmission method in an embodiment of this application are implemented.

According to a sixth aspect, a chip is provided, where the chip includes a processor and a communication interface, the communication interface is coupled to the processor, and the processor is configured to run a program or instructions to implement the sidelink transmission method provided in an embodiment of this application.

According to a seventh aspect, a computer program/program product is provided and stored in a storage medium, and the computer program/program product is executed by at least one processor to implement the steps of the sidelink transmission method provided in an embodiment of this application.

In the embodiment of this application, the terminal listens for the first resource, to obtain a corresponding listening result; and determine, based on the listening result, whether to perform sidelink transmission. The first resource includes the interlace, and the interlace includes at least one of the following: the interlace determined based on the SL-BWP; the interlace determined based on the carrier; the interlace determined based on the at least one resource block set RB set. This may support to perform sidelink transmission on the interlace included in the first resource, and the interlace is a non-consecutive resource, thereby enabling the sidelink transmission to be performed on a wide bandwidth, to improve a transmission performance of the sidelink transmission.

## BRIEF DESCRIPTION OF THE DRAWINGS

FIG. 1 is a block diagram of a wireless communication system applicable to an embodiment of this application;
FIG. 2 is a flowchart of a sidelink transmission method according to an embodiment of this application;
FIG. 3 is a schematic diagram of an interlace according to an embodiment of this application;
FIG. 4 is a schematic diagram of another interlace according to an embodiment of this application;
FIG. 5 is a schematic diagram of another interlace according to an embodiment of this application;
FIG. 6 is a schematic diagram of another interlace according to an embodiment of this application;
FIG. 7 is a diagram of a structure of a sidelink transmission apparatus according to an embodiment of this application;
FIG. 8 is a diagram of a structure of a communication device according to an embodiment of this application; and
FIG. 9 is a diagram of a structure of a terminal according to an embodiment of this application.

## DETAILED DESCRIPTION

The technical solutions in embodiments of this application are clearly and completely described in the following with reference to the accompanying drawings in embodiments of this application. Apparently, the described embodiments are merely some rather than all of embodiments of this application. All other embodiments obtained by persons skilled in the art based on embodiments of this application fall within the protection scope of this application.

The specification and claims of this application, and terms "first" and "second" are used to distinguish similar objects, but are unnecessarily used to describe a specific sequence or order. It is to be understood that terms used in this way is exchangeable in a proper case, so that embodiments of this application described herein can be implemented in an order different from the order shown or described herein. Objects distinguished by "first" and "second" are usually of one type, and there is no limit to a quantity of objects, for example, a first object may be one or more than one. In addition, "and/or" used in this specification and the claims represents at least one of the connected objects. The character "/" generally indicates an "or" relationship between the associated objects.

It is worth pointing out that the technologies described in embodiments of this application are not limited to a long term evolution (Long Term Evolution, LTE)/LTE-advanced (LTE-Advanced, LTE-A) system, and may further be applied to another wireless communication system such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" are usually used interchangeably in embodiments of this application. The technology described can be applied to the systems and radio technologies mentioned above, and can also be applied to other systems and radio technologies. The following descriptions describe a new radio (New Radio, NR) system for an example purpose and uses an NR term in most of the following descriptions, but these techniques may also be applied to applications other than an NR system application, such as a 6th generation (6th Generation, 6G) communication system.

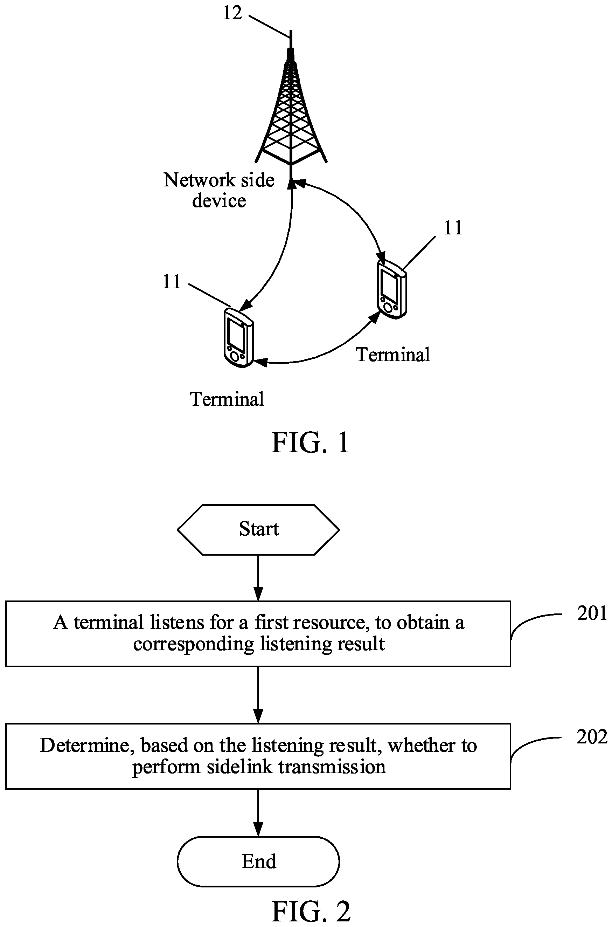

FIG. 1 is a block diagram of a wireless communication system applicable to an embodiment of this application. The wireless communication system includes a plurality of terminals 11. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home equipment with a wireless communication function, such as a refrigerator, a TV, a washing machine or furniture), a game machine, a personal computer (personal computer, PC), a teller machine or self-service machine and another terminal side device. Wearable devices include: a smart watch, a smart bracelet, a smart headphone, smart glasses, smart jewelry (a smart bracelet, a smart bracelet, a smart ring, a smart necklace, a smart anklet, or a smart anklet), a smart wristband, and smart clothing. It should be noted that, a specific type of the terminal 11 is not limited in embodiments of this application. Terminals 11 may communicate directly with each other over a sidelink (sidelink, or interpreted as sidelink, sidelink, or sidelink). The terminal for direct communication may be both on-network or both off-network, and some devices may be on-network and some off-network.

In addition, the system may further include a network side device 12. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another suitable term in the art. Provided that the same technical effect is achieved, the base station is not limited to a particular technical vocabulary. It should be noted that, only a base station in the NR system is used as an example in embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that, in embodiments of this application, only the core network device in the NR system is introduced as an example, and a specific type of the core network device is not limited.

In embodiments of this application, in some implementations, when a bandwidth of a BWP or a carrier is greater than 20 MHz in an unlicensed band, a channel may be listened for in a unit of a listening subband (LBT subband) or an RB set (RB size), a size of each RB set of about 20 MHz depends on a size of a guard band (guard band) between adjacent RB sets, in consideration of a coexistence problem with a node such as Wi-Fi. For a large-bandwidth BWP, for example, a BWP bandwidth is 80 MHz, the network side device or the terminal may listen on 4 RB sets and then transmit data on an RB set where all listened channels are empty. It should be noted that, a size of the RB set here is only an example.

A sidelink transmission method, a terminal, and a storage medium provided in embodiments of this application are described in detail with reference to the drawings by using some embodiments and application scenarios.

FIG. 2 is a flowchart of a sidelink transmission method according to an embodiment of this application. As shown in FIG. 2, the method includes the following steps:

Step 201: A terminal listens for a first resource, to obtain a corresponding listening result.
Step 202: Determine, based on the listening result, whether to perform sidelink transmission.

The first resource includes an interlace, and the interlace includes at least one of the following:

an interlace determined based on an SL-BWP;
an interlace determined based on a carrier; or
an interlace determined based on at least one RB set.

The above-mentioned first resource may be a sub-channel (sub-channel) including at least one interlace, or may be a resource pool (resource pool) including at least one interlace.

The interlace described above including the at least one of the above may be understood as: The first resource includes at least one interlace determined based on the SL-BWP, the first resource includes at least one interlace determined based on the carrier, the first resource includes at least one interlace determined based on the at least one RB set, the first resource includes the at least one interlace determined based on the carrier, and may further include the at least one interlace determined based on the at least one RB set, or the first resource includes the at least one interlace determined based on the SL-BWP, and may further include the at least one interlace determined based on the at least one RB set.

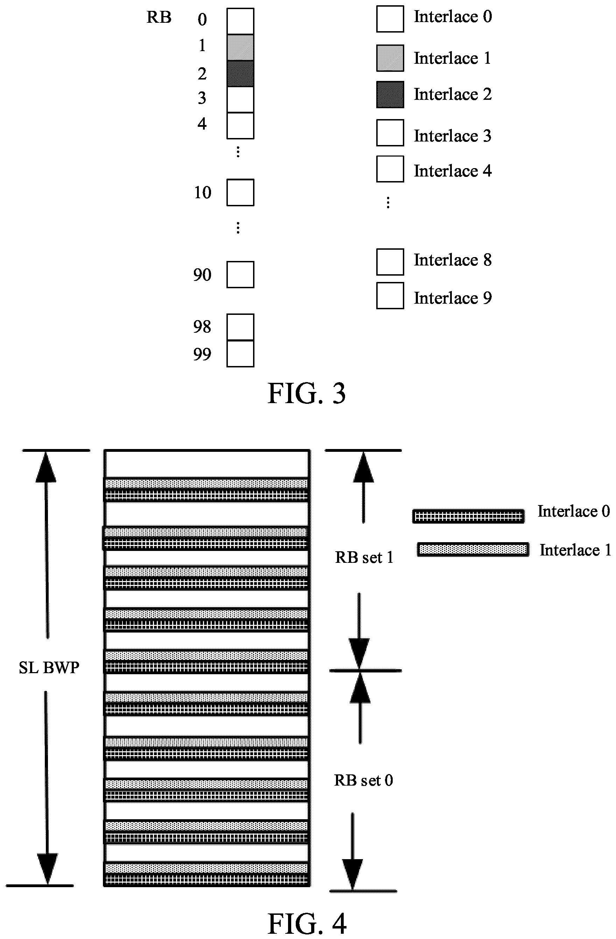

The interlace determined based on the SL-BWP described above may be that a physical resource block (Physical Resource Block, PRB) included in each interlace is uniformly or approximately uniformly distributed in the entire SL-BWP. For example: The SL-BWP is 20 MHz and includes 100 RBs, and as shown in FIG. 3, the 100 RBs are uniformly divided into 10 interlaces. Each interlace includes 10 equally spaced PRBs, where the interlace $m$ includes an RB $\{m, M + m, 2M + m, 3M + m, ...\}$, $m \in \{0, 1, ..., M - 1\}$, and $M$ is a number of interlaces, for example: An interlace 0 includes an RB 0, 10, 20, ..., and 90, and an interlace 1 includes an RB 1, 11, 21, ..., and 91.

The interlace determined based on the carrier described above may be that a PRB included in each interlace is uniformly or approximately uniformly distributed in the entire carrier.

The interlace determined based on the at least one RB set may be such that a PRB included in each interlace is uniformly or approximately uniformly distributed in the at least one RB set.

Specifically, the first resource may include one or more interlaces.

The terminal listening for the first resource may be listening for whether the first resource is occupied or whether there is an idle resource for the first resource. Based on the listening result, determining whether to perform sidelink transmission may be determining to perform sidelink transmission on the first resource if the first resource is unoccupied, and vice versa, determining not to perform sidelink transmission, or determining to perform sidelink transmission on the first resource if there is the idle resource for the first resource, and vice versa, determining not to perform sidelink transmission.

In one implementation, listen before talk (listen before talk, LBT) listening may be performed on the first resource, and when the first resource is listened for to be empty, it is determined to perform sidelink transmission on the first resource, and vice versa, it is determined not to perform sidelink transmission.

In one embodiment, energy detection (energy detection, ED) may be performed on a surrounding node on the first resource, and when detected power is below a threshold, it is determined to perform sidelink transmission on the first resource, and vice versa, it is determined not to perform sidelink transmission.

In the embodiment of this application, the terminal performing sidelink transmission on the first resource may be the terminal sending a sidelink message, such as a broadcast, unicast, multicast, or multicast sidelink message on the first resource.

In the embodiment of this application, the terminal listens for the first resource to obtain the corresponding listening result. The terminal determines, based on the listening result, whether to perform sidelink transmission. The first resource includes the interlace, and the interlace includes at least one of the following: the interlace determined based on the SL-BWP, the interlace determined based on the carrier, or the interlace determined based on the at least one resource block set RB set. This may support to perform sidelink transmission on the interlace included in the first resource, and the interlace is a non-consecutive resource, thereby enabling the sidelink transmission to be performed on a wide bandwidth, to improve a transmission performance of the sidelink transmission.

In addition, when the above-described first resource is an unlicensed band, performing sidelink transmission on the first resource enables, on the unlicensed band, the terminal to transmit a sidelink message when a relevant rule of the unlicensed band is satisfied, for example, an occupied channel bandwidth (occupied channel bandwidth, OCB) rule is satisfied, or a maximum channel occupancy time (maximum channel occupancy time, MCOT) rule is satisfied.

In an optional implementation, the interlace determined based on the SL-BWP includes:

an interlace in the at least one interlace obtained by performing interlacing on the entire SL-BWP.

Performing interlacing on the entire SL-BWP may be, for example, performing interlacing on the SL-BWP as a whole, to obtain the at least one interlace, and a PRB included in each interlace is uniformly or approximately uniformly distributed in entire SL-BW. For example: As shown in FIG. 4, the interlace obtained by performing interlacing on the SL-BWP includes an interlace 0 and an interlace 1, and a remaining interlace is not illustrated in FIG. 4. The first resource includes part or all of the at least one interlace obtained by performing interlacing on the entire SL-BWP.

In this implementation, it can be achieved that an occupied bandwidth of the sidelink message is equal to or approximately equal to a bandwidth of the SL-BWP, to further improve a transmission performance of the sidelink message.

In an optional implementation, the interlace determined based the carrier (carrier) includes:

an interlace in the at least one interlace obtained by performing interlacing on the entire carrier.

Performing interlacing on the entire carrier may be, for example, performing interlacing on the carrier as a whole, to obtain the at least one interlace, and a PRB included in each interlace uniformly or approximately uniformly distributed in the entire carrier. For example: The first resource includes part or all of the at least one interlace obtained by performing interlacing on the entire carrier.

In this implementation, it can be achieved that an occupied bandwidth of the sidelink message is equal to or approximately equal to a bandwidth of the carrier, to further improve a transmission performance of the sidelink message.

In an optional implementation, the interlace determined based on the at least one RB set includes: an interlace in the at least one interlace obtained by performing interlacing on the at least one RB set.

Performing interlacing on the at least one RB set may be, for example, performing interlacing on the at least one RB set as a whole, to obtain the at least one interlace, and a PRB included in each interlace is uniformly or approximately uniformly distributed in the at least one RB set. For example: The first resource includes part or all of the at least one interlace obtained by performing interlacing on the at least one RB set.

In this implementation, it can be achieved that an occupied bandwidth of the sidelink message is equal to or approximately equal to a bandwidth of the at least one RB set, to further improve a transmission performance of the sidelink message.

In an optional implementation, the first resource is at least one sub-channel (sub-channel), where each sub-channel includes the at least one interlace.

In this implementation, the sub-channel is defined as a resource including one or more interlaces. In particular, the sidelink message may be transmitted on part or all of interlaces on the at least one sub-channel, to improve a transmission performance of the sidelink message.

Optionally, a sub-channel size (Sub-channel size) in the at least one sub-channel is determined by at least one of the following:

a number of interlaces included in the sub-channel; or
a PRB included in each interlace.

In this implementation, it can be achieved that the sub-channel size is determined by the number of interlaces and/or a PRB included in each interlace, and this can improve a resource allocation effect.

Optionally, each sub-channel includes an integer number of RB sets in frequency domain. To be specific, any RB set in which a resource is located in frequency domain in each sub-channel is used as an RB set included in the sub-channel.

In this implementation, since each sub-channel includes the integer number of RB sets in frequency domain, an available resource may be indicated at a granularity of the RB set to save signaling overhead.

Optionally, an index of the at least one sub-channel is determined by at least one of the following: a number of RB sets corresponding to one interlace, a total number of interlaces obtained by performing interlacing, a number of consecutive RB sets included in the sub-channel, and a number of consecutive interlaces included in the sub-channel.

The number of RB sets corresponding to the one interlace may be a number of RB sets to which a PRB belongs, included in the one interlace, for example, the one interlace includes part of PRBs in 3 RB sets, and the number of RB sets corresponding to the one interlace may be 3. Alternatively, the number of RB sets corresponding to the one interlace may be understood as a number of RB sets included in the one interlace or a number of RB sets that the one interlace refers to.

The total number of interlaces obtained by performing interlacing described above may be a total number of interlaces obtained by performing interlacing on the SL-BWP, the carrier, or the at least one RB set, namely, a total number of interlaces included in the one SL-BWP, the one carrier, the at least one RB set.

Optionally, an index of the sub-channel, an index of the RB set, and an index of the interlace satisfy the following relationship:

$$\text{sub} - \text{channel } l = 0, 1, 2, \ldots \left( \frac{I}{K} \times \frac{M}{N} \right) - 1$$

$$\text{RB set index } i = \left\lfloor \frac{l}{M/N} \right\rfloor \times K + k, \qquad i = 0, \ldots I - 1, k = 0, \ldots, K - 1$$

$$\text{interlace index } m = \ \text{mod} \left( l, \frac{M}{N} \right) \times N + n, \quad m = \{0, \ldots, M - 1\}, n = \{0, \ldots, N - 1\}$$

sub - channel $l$ represents the index of the sub-channel $l$, I is the number of RB sets corresponding to the one interlace, M is the total number of interlaces obtained by performing interlacing, and each sub-channel $l$ includes K consecutive RB sets and N consecutive interlaces.

In this implementation, since the index of the sub-channel, the index of the RB set, and the index of the interlace satisfy the above relationship, it is possible to perform uniform numbering on the sub-channel, the RB set, and the interlace to simplify complexity of the index of the sub-channel, the index of the RB set, and the index of the interlace.

It should be noted that in the embodiment of this application, it is not limited that the index of the sub-channel, the index of the RB set, and the index of the interlace are determined according to the above formula. For example: The sub-channel may be numbered directly based on the number of consecutive interlaces included in the sub-channel, or the sub-channel may be numbered directly based on the number of consecutive RB sets included in the sub-channel, while the index of the RB set may be numbered based on a number of PRBs included in the RB set, and the index of the interlace may be numbered based on a number of PRBs included in the interlace.

Optionally, when the first resource is the at least one sub-channel, sidelink control information (Sidelink Control Information, SCI) transmitted by the terminal indicates at least one of the following:

an available RB set (available RB set) of the at least one sub-channel; or
an RB set used by the terminal in the at least one sub-channel.

The SCI may be transmitted by the terminal, for example: The terminal may be a transmitting end for sending the Sidelink message, or the SCI may be received by the terminal, for example: The terminal is a receiving end for receiving the Sidelink message.

The SCI may be first stage SCI or other SCI. This is not limited.

In some implementations, the SCI described above may indicate an available RB set for each sub-channel. The available RB set is an RB set, on the unlicensed band, in which a listened channel is empty.

In this implementation, the available RB set in the at least one sub-channel is indicated by using the SCI described above, so that by using the available RB set in the at least one sub-channel, the receiving end can determine on which resources to receive the Sidelink message, to improve transmission reliability of the Sidelink message. The RB set used by the terminal in the at least one sub-channel is indicated by the SCI, so that the receiving end can directly receive the Sidelink message on the interlace corresponding to the RB sets, to improve transmission reliability of the Sidelink message.

Optionally, when the first resource is the at least one sub-channel, a resource pool (Resource pool) includes the at least one sub-channel.

In this implementation, the resource pool is defined to include one or more sub-channels, and this may enable transmission of the sidelink message in the sub-channel in the resource pool.

In an optional implementation, the first resource is at least one resource pool (resource pool), where each resource pool includes the at least one interlace.

In this implementation, the resource pool is defined to include a resource of one or more interlaces. In particular, the sidelink message may be transmitted on part or all of interlaces in the at least one resource pool, to improve a transmission performance of the sidelink message.

Optionally, when the first resource is the at least one resource pool, the SCI transmitted by the terminal indicates at least one of the following:

an available RB set (available RB set) in the at least one resource pool;
an interlace index allocated for the terminal; or
an RB set used by the terminal in the at least one resource pool.

The SCI may be transmitted by the terminal, for example: The terminal may be a transmitting end for sending the Sidelink message, or the SCI may be received by the terminal, for example: The terminal is a receiving end for receiving the Sidelink message.

The SCI may be first stage SCI (first stage SCI) or other SCI. This is not limited.

In some implementations, the SCI described above may indicate an available RB set for each resource pool.

The SCI may be first stage SCI (first stage SCI) or other SCI. This is not limited.

In this implementation, the available RB set in the at least one resource pool is indicated by using the SCI described above, so that by using the available RB set in the at least one resource pool, the receiving end can determine on which resources to receive the Sidelink message, to improve transmission reliability of the Sidelink message. The interlace index allocated for the terminal is indicated by the above SCI, so that the receiving end can directly receive the Sidelink message on the interlaces, to improve transmission reliability of the Sidelink message. The RB set used by the terminal in the at least one resource pool is indicated by the SCI, so that the receiving end can directly receive the Sidelink message on the interlace corresponding to the RB sets, to improve transmission reliability of the Sidelink message.

Optionally, each resource pool includes an integer number of RB sets in frequency domain. To be specific, any RB set in which a resource is located in frequency domain in each resource pool is used as the RB set included in the sub-channel.

In this implementation, since each resource pool includes the integer number of RB sets in frequency domain, the available resource may be indicated at a granularity of the RB set to save signaling overhead.

In the embodiment of this application, the terminal listens for the first resource to obtain the corresponding listening result. The terminal determines, based on the listening result, whether to perform sidelink transmission. The first resource includes the interlace, and the interlace includes at least one of the following: the interlace determined based on the SL-BWP, the interlace determined based on the carrier, or the interlace determined based on the at least one resource block set RB set. This may support to perform sidelink transmission on the interlace included in the first resource, and the interlace is a non-consecutive resource, thereby enabling the sidelink transmission to be performed on a wide bandwidth, to improve a transmission performance of the sidelink transmission.

The methods provided by this application are illustrated below by using examples in a plurality of embodiments.

Embodiment 1:

In an unlicensed band, to satisfy an OCB requirement, transmission is performed in an interlace manner. Furthermore, when a transmission bandwidth is larger than 20 MHz or an RB set, and when a channel of the transmission bandwidth (for example, an SL-BWP or a carrier, divided into several RB sets) may be accessed, listen before talk (Listen Before Talk, LBT) is performed separately on each RB set. The interlace may be for the SL-BWP or the carrier, and a PRB included in each interlace is uniformly or approximately uniformly distributed in the entire SL-BWP or carrier. Furthermore, the interlace may also be for one or more RB sets, and a PRB included in each interlace (approximately) uniformly distributed in the one entire or more RB sets. A number of interlaces on the SL-BWP or the carrier is different based on different subcarrier spacing (Subcarrier Spacing, SCS), for example, when SCS=15 KHz, the number of interlaces is 10, and when the SCS is 30 KHz, the number of interlaces is 5. For example, when a BWP bandwidth is 40 MHz, if SCS=15 KHz for a total of 216 PRBs, an interlace 0 includes 21 PRBs as 10, 10, 20, ..., 200, 210}, and so on, and an interlace 9 includes 20 PRBs as 19, 19, 29, ..., 199, 209}. The interlace 0 to the interlace 9 are approximately uniformly distributed in the BWP based on different total numbers of PRBs.

Embodiment 2:

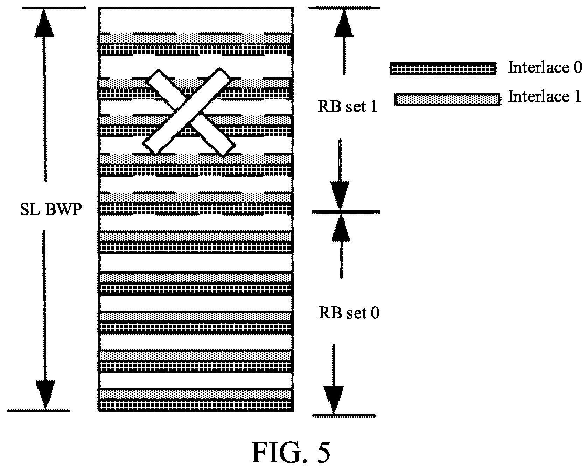

It is assumed that one SL BWP or carrier is 40 MHz, and includes two RB sets, and interlacing is performed on the entire SL BWP or carrier, as shown in FIG. 5. If a sub-channel 0 is defined to include an interlace 0 and an interlace 1, when the sub-channel 0 is allocated, a terminal uses a PRB of the interlace 0 and the interlace 1 in the figure. In an unlicensed band, considering a problem of channel availability, before each transmission, a transmitting end may perform LBT on each RB set, and finally perform data transmission only on an RB set in which a channel is empty. Therefore, at first stage SCI (for example, SCI 1-A), in addition to indicating a sub-channel in a frequency domain assignment (frequency domain assignment) domain, a domain (for example, an available RB set) may be added to indicate actual transmission or the RB set in which the channel is empty. If the transmitting end indicates that a frequency domain resource used is a sub-channel 0 and an RB set 0, a receiving end performs physical sidelink control channel (Physical Sidelink Control Channel, PSCCH)/physical sidelink shared channel (Physical Sidelink Shared Channel, PSSCH) reception on PRBs corresponding to the interlace 0 and the interlace 1 on the RB set 0, that is, partial sub-channel is used.

If the partial sub-channel can be used in the unlicensed band, an interlace index used in each sub-channel can also be indicated, for example, the transmitting end allocates the frequency domain resource as a sub-channel 1, an RB set 0, and an interlace 0, and the receiving end receives a PSCCH/PSSCH on the PRB included in the interlace 0 on the RB set 0.

When the interlace is for the entire SL BWP or carrier, the available RB set may directly indicate an RB set in which a channel on each BWP or carrier is empty. A number of bits needed depends on a number of RB sets on the BWP or carrier. For example: the BWP is 80 MHz and includes 4 RB sets. The sub-channel 0 is the interlace 0 and the interlace 1. A sub-channel 3 is an interlace 4 and an interlace 5, and when the available RB set indicates to be 0011, then it indicates that the sub-channel 0 and the sub-channel 3 are available resources on an RB set 2 and an RB set 3.

When the sub-channel includes a plurality of RB sets, one PSCCH may be configured on each RB set. The transmitting end transmits the PSCCH only on a lowest RB set (lowest RB set) in the RB set in which the channel is empty, and does not transmit the PSCCH on another RB set. The receiving end starts detecting the PSCCH on the lowest PRB in each RB set included in the sub-channel. When the PSCCH is detected, the receiving end detects the PSCCH only on an RB set in which the PSCCH is detected within COT.

Embodiment 3:

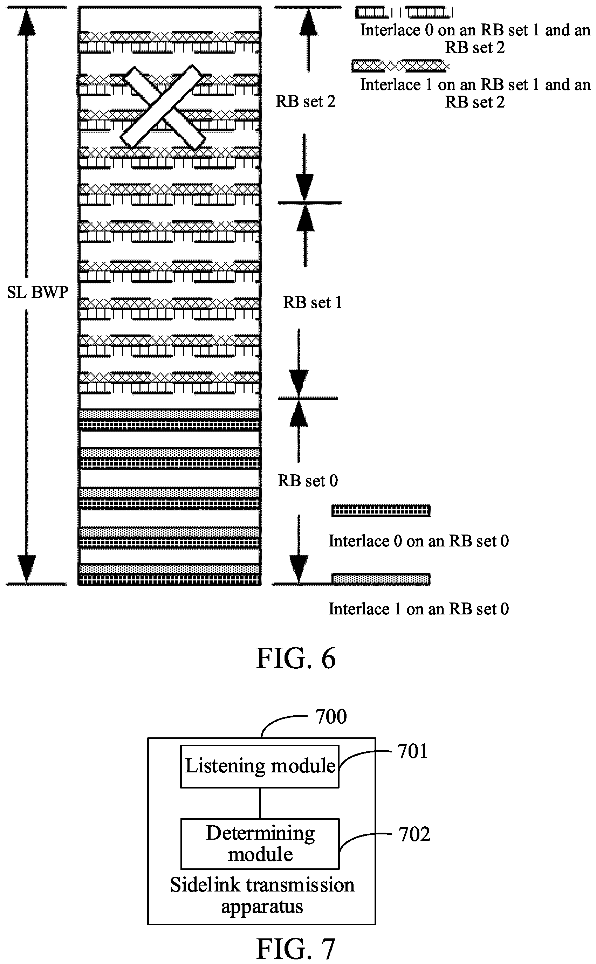

If an interlace is for one or more RB sets, as shown in FIG. 6, a BWP includes three RB sets, with one set of interlaces for an RB set 0 and the other set of interlaces for an RB set 1 and an RB set 2. A number of PRBs included in the interlaces in the RB set 1 and the RB set 2 is approximately twice a number of PRBs included in the interlaces in the RB set 0. A sub-channel 0 is defined as an interlace 0 and an interlace 1 on the RB set 0, and the sub-channel 1 is defined as an interlace 0 and an interlace 1 on the RB set 1 and the RB set 2. When a transmitting end allocates the Sub-channel 0, a receiving end only performs receiving on the interlace 0 and the interlace 1 on the RB set 0. When the transmitting end allocates the Sub-channel 1, the receiving end only performing receiving on the interlace 0 and interlace 1 on the RB set 1 and the RB set 2. If the transmitting end also indicates that an available RB set is the RB set 1, the receiving end only performs receiving on the interlace 0 and the interlace 1 on the RB set 1.

In addition, if a resource pool is defined as one RB set, to be specific, the RB set 0 to the RB set 2 respectively correspond to a resource pool 0 to a resource pool 2, interlacing can be performed on each RB set/resource pool, and resources are allocated in one RB set each time. The Sub-channel may be one or more interlaces in the RB set.

Embodiment 4: In the above embodiments 2 and 3, a sub-channel can be further defined as some interlaces on some RB sets. For example, interlacing is performed on a BWP/carrier of 80 MHz, or 4 RB sets, with a total of 10 interlaces. A sub-channel 0 is defined as an interlace 0 and an interlace 1 on an RB set 0 and an RB set 1, a sub-channel 1 is defined as an interlace 2 and an interlace 3 on the RB set 0 and the RB set 1, and so on, a sub-channel 4 is defined as an interlace 8 and an interlace 9 on the RB set 0 and the RB set 1, a sub-channel 5 is defined as an interlace 0 and an interlace 1 on an RB set 2 and an RB set 3, ..., and a sub-channel 9 is an interlace 8 and an interlace 9 on the RB set 2 and the RB set 3. That is, each sub-channel includes two consecutive interlaces within two consecutive RB sets.

The sub-channel is mapped to the RB set, as well as an index of an interlace one by one. It is assumed that there are a total of I RB sets, to be specific, each interlace includes the I RB sets. Each sub-channel *l* includes K consecutive RB sets and N consecutive interlaces. Mod (I, K)=0, Mod (M, N)=0. M is a total number of interlaces. Then the sub-channel *l* and a relationship between parameters are as follows:

$$\text{sub} - \text{channel } l = 0, 1, 2, \ldots \left(\frac{I}{K} \times \frac{M}{N}\right) - 1$$

$$\text{RB set index } i = \left\lfloor \frac{l}{M/N} \right\rfloor \times K + k, \qquad i = 0, \ldots . I-1, k = 0, \ldots, K-1$$

$$\text{interlace index } m = \ \text{mod}\left(l, \frac{M}{N}\right) \times N + n, \quad m = \{0, \ldots, M-1\}, n = \{0, \ldots, N-1\}$$

sub - channel *l* represents an index of a sub-channel *l*, I is a number of RB sets corresponding to one interlace, M is a total number of interlaces obtained by performing interlacing, and each sub-channel *l* includes K consecutive RB sets and N consecutive interlaces.

At this time, an available RB set may be indicated separately for each sub-channel. If an LBT listening result is that a channel of the RB set 0 is empty, if only the sub-channel 0 is allocated by SCI, the available RB set may be indicated as 1000, and it indicates that a resource of the sub-channel 0 is available on the RB set 0. The RB set 2 and RB set 3 not included in the sub-channel 0 are indicated as unavailable even if a channel is empty. If the SCI allocates the sub-channel 0 and the sub-channel 5 at the same time, the available RB set may be indicated to be 1010, it indicates that the resource of the sub-channel 0 on the RB set 0 is available, and a resource of the sub-channel 5 on the RB set 2 is available.

Embodiment 5:

A resource pool is defined as one or more interlaces, and the interlace may be for a BWP/carrier or at least one RB set. Alternatively, a sub-channel size is defined as one interlace, and allocation for the sub-channel is equivalent to allocation for the interlace. A number of Sub-channels is equal to a number of interlaces. Likewise, an available resource may be determined by a sub-channel/interlace indication in first stage SCI and an available RB set indication.

The following can be implemented in embodiments of this application:

Interlacing is performed on an SL-BWP/carrier or at least one RB set;

a sub-channel is defined as a non-consecutive resource including one or more interlaces;
a resource pool is defined as a non-consecutive resource including one or more interlaces;
each resource pool includes one or more sub-channels; and
an available RB set of each sub-channel or resource pool is indicated in the first stage SCI, and an interlace index may also be further indicated.

Embodiments of this application define a non-consecutive sub-channel or resource pool, so that in the unlicensed band, the terminal can transmit information when satisfying a regulation.

The sidelink transmission method according to the embodiment of this application may be performed by a transmission determining apparatus. The sidelink transmission apparatus provided by the embodiment of this application is explained by taking the sidelink transmission apparatus to perform the transmission determination method as an example in the embodiment of the application.

FIG. 7 is a diagram of a structure of a sidelink transmission apparatus according to an embodiment of this application. As shown in FIG. 7, the apparatus includes:

a listening module 701, configured to listen for a first resource, to obtain a corresponding listening result; and
a determining module 702, configured to determine, based on the listening result, whether to perform sidelink transmission.

The first resource includes an interlace interlace, and the interlace includes at least one of the following:

an interlace determined based on a sidelink bandwidth part SL-BWP;
an interlace determined based on a carrier; or
an interlace determined based on at least one resource block set RB set.

Optionally, the interlace determined based on the sidelink bandwidth part SL-BWP includes:
an interlace in at least one interlace obtained by performing interlacing on the entire SL-BWP.

Optionally, the carrier-based determined interlace includes:
an interlace in at least one interlace obtained by performing interlacing on the entire carrier.

Optionally, the interlace determined based on the at least one RB set includes:
an interlace in at least one interlace obtained by performing interlacing on the at least one RB set.

Optionally, the first resource is at least one sub-channel, where each sub-channel includes at least one interlace; or

the first resource is at least one resource pool, where each resource pool includes the at least one interlace.

Optionally, a sub-channel size in the at least one sub-channel is determined by at least one of the following:

a number of interlaces included in the sub-channel; or
a physical resource block PRB included in each interlace.

Optionally, each sub-channel includes an integer number of RB sets in frequency domain; and/or

an index of the at least one sub-channel is determined by at least one of the following:
a number of RB sets corresponding to one interlace, a total number of interlaces obtained by performing interlacing, a number of consecutive RB sets included in the sub-channel, and a number of consecutive interlaces included in the sub-channel.

Optionally, an index of the sub-channel, an index of an RB set, and an index of the interlace satisfy the following relationship:

$$\text{sub} - \text{channel } l = 0, 1, 2, \dots \left( \frac{I}{K} \times \frac{M}{N} \right) - 1$$

$$\text{RB set index } i = \left\lfloor \frac{l}{M/N} \right\rfloor \times K + k, \qquad i = 0, \dots. I - 1, k = 0, \dots, K - 1$$

$$\text{interlace index } m = \text{mod}\left(l, \frac{M}{N}\right) \times N + n, \quad m = \{0, \dots, M-1\}, n = \{0, \dots, N-1\}$$

sub - channel *l* represents the index of the sub-channel *l*, I is the number of RB sets corresponding to the one interlace, M is the total number of interlaces obtained by performing interlacing, and each sub-channel *l* includes K consecutive RB sets and N consecutive interlaces.

Optionally, when the first resource is the at least one sub-channel, sidelink control information SCI transmitted by the terminal indicates at least one of the following:

an available RB set of the at least one sub-channel; or
an RB set used by the terminal in the at least one sub-channel.

Optionally, when the first resource is at least one sub-channel, the resource pool includes the at least one sub-channel.

Optionally, when the first resource is the at least one resource pool, SCI transmitted by the terminal indicates at least one of the following:

an available RB set of the at least one resource pool;
an interlace index allocated for the terminal; or
an RB set used by the terminal in the at least one resource pool.

Optionally, each resource pool includes an integer number of RB sets in frequency domain.

The above-described sidelink transmission apparatus may improve a transmission performance of sidelink transmission.

The sidelink transmission apparatus in embodiments of this application may be an electronic device, such as an electronic device having an operating system, or may be a component in an electronic device, such as an integrated circuit or a chip. The electronic device may be the terminal or a device other than the terminal. For example, the terminal may include, but is not limited to, a type of the terminal listed in the embodiments herein, and another device may be a server, a network attached storage (Network Attached Storage, NAS), or the like, and embodiments of this application herein are not particularly limited.

The sidelink transmission apparatus provided in embodiments of this application can implement the processes implemented in the method embodiment of FIG. 2. To avoid repetition, details are not described herein again.

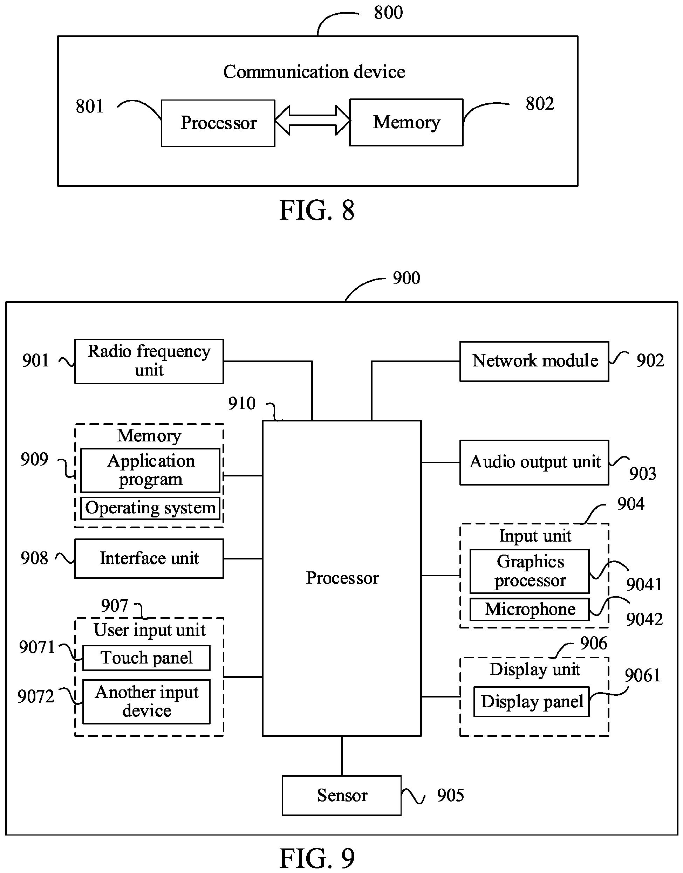

Optionally, as shown in FIG. 8, embodiments of this application further provide a communication device 800, including a processor 801 and a memory 802. A program or instructions are stored on the memory 802 and executed on the processor 801. For example, when the communication device 800 is a terminal, and the program or instructions are executed by the processor 801, the processes of the embodiments of the sidelink transmission method are implemented, and can achieve the same technical effects.

An embodiment of this application further provides a terminal, including a processor and a communication interface, and the communication interface is configured to listen for a first resource, to obtain a corresponding listening result. The processor is configured to determine, based on the listening result, whether to perform sidelink transmission. The first resource includes an interlace interlace, and the interlace includes at least one of the following: an interlace determined based on a sidelink bandwidth part SL-BWP; an interlace determined based on a carrier; or an interlace determined based on at least one resource block set RB set. The terminal embodiment corresponds to the terminal side method embodiment described above, and each implementation procedure and implementation of the method embodiment described above can be applied to the terminal embodiment, and the same technical effect can be achieved. Specifically, FIG. 9 is a schematic diagram of a hardware structure of a terminal according to an embodiment of this application.

This terminal 900 includes, but is not limited to: at least part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) for supplying power to the components. The power supply may be logically connected to the processor 910 by a power management system, thereby implementing functions such as charging, discharging, and power consumption management by using the power management system. The terminal structure shown in FIG. 9 does not constitute a limitation on the terminal, and the terminal may include more or fewer components than shown in the figure, or combine some components, or have different component arrangements. Details are not described herein again.

It should be understood that the input unit 904 may include a graphics processing unit (Graphics Processing Unit, GPU) 9041 and a microphone 9042. The graphics processing unit 9041 performs processing on image data of a static picture or a video that is obtained by an image acquisition apparatus (for example, a camera) in a video acquisition mode or an image acquisition mode. The display unit 906 may include a display panel 9061. The display panel 9061 may be configured in the form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but not limited to, a physical keyboard, a functional key (such as a volume control key or a switch key), a track ball, a mouse, and a joystick. Details are not described herein again.

In the embodiment of this application, the radio frequency unit 901 receives downlink data from a network side device and transmits the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 is configured to store a software program and various data. The memory 909 may mainly include a first storage area storing a program or instructions and a second storage area storing data. The first storage area may store an operating system, an application program or instructions required by at least one function (for example, a sound playback function and an image display function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM). The memory 909 in embodiments of this application includes, but is not limited to, these memories and any other suitable types.

The processor 910 may include one or more processing units. Optionally, the processor 910 integrates an application processor and a modem processor, where the application processor mainly processes an operating system, a user interface, an application program, and the like, and the modem processor mainly processes wireless communication, such as a baseband processor. It can be understood that, the modem processor may not be integrated into the processor 910.

The radio frequency unit 901 is configured to listen for a first resource to obtain a corresponding listening result; and the processor 910 is configured to determine whether to perform sidelink transmission based on the listening result.

The first resource includes an interlace interlace, and the interlace includes at least one of the following:

an interlace determined based on a sidelink bandwidth part SL-BWP;
an interlace determined based on a carrier; or
an interlace determined based on at least one resource block set RB set.

Optionally, the interlace determined based on the sidelink bandwidth part SL-BWP includes:
an interlace in at least one interlace obtained by performing interlacing on the entire SL-BWP.

Optionally, the interlace determined based on the carrier includes:
an interlace in at least one interlace obtained by performing interlacing on the entire carrier.

Optionally, the interlace determined based on the at least one RB set includes:
an interlace in at least one interlace obtained by performing interlacing on the at least one RB set.

Optionally, the first resource is at least one sub-channel, where each sub-channel includes at least one interlace; or
the first resource is at least one resource pool, where each resource pool includes the at least one interlace.

Optionally, a sub-channel size in the at least one sub-channel is determined by at least one of the following:

a number of interlaces included in the sub-channel; or
a physical resource block PRB, included in each interlace.

Optionally, each sub-channel includes an integer number of RB sets in frequency domain;
and/or

an index of the at least one sub-channel is determined by at least one of the following:
a number of RB sets corresponding to one interlace, a total number of interlaces obtained by performing interlacing, a number of consecutive RB sets included in the sub-channel, and a number of consecutive interlaces included in the sub-channel.

Optionally, an index of the sub-channel, an index of an RB set, and an index of the interlace satisfy the following relationship:

$$\text{sub} - \text{channel } l = 0, 1, 2, \dots \left( \frac{I}{K} \times \frac{M}{N} \right) - 1$$

$$\text{RB set index } i = \left\lfloor \frac{l}{M/N} \right\rfloor \times K + k, \qquad i = 0, \dots . I - 1, k = 0, \dots, K - 1$$

$$\text{interlace index } m = \text{mod}\left( l, \frac{M}{N} \right) \times N + n, \quad m = \{0, \dots, M - 1\}, n = \{0, \dots, N - 1\}$$

sub - channel *l* represents the index of the sub-channel *l*, I is the number of RB sets corresponding to the one interlace, M is the total number of interlaces obtained by performing interlacing, and each sub-channel *l* includes K consecutive RB sets and N consecutive interlaces.

Optionally, when the first resource is the at least one sub-channel, sidelink control information SCI transmitted by the terminal indicates at least one of the following:

an available RB set of the at least one sub-channel; or
an RB set used by the terminal in the at least one sub-channel.

Optionally, when the first resource is the at least one sub-channel, the resource pool includes the at least one sub-channel.

Optionally, when the first resource is the at least one resource pool, SCI transmitted by the terminal indicates at least one of the following:

an available RB set of the at least one resource pool;
an interlace index allocated for the terminal; or
an RB set used by the terminal in the at least one resource pool.

Optionally, each resource pool includes an integer number of RB sets in frequency domain.

The terminal described above may improve a transmission performance of the sidelink transmission.

Embodiments of this application further provide a readable storage medium, storing a program or instructions, when the program or instructions are executed by a processor, the processes of the foregoing sidelink transmission method embodiments are implemented, and the same technical effects can be achieved. Details are not described herein again to avoid repetition.

The processor is a processor of the terminal according to the foregoing embodiments. The readable storage medium includes a computer-readable storage medium such as a computer read-only memory ROM, a random access memory RAM, a magnetic or optical disk, or the like.

An embodiment of this application provides a chip, including a processor and a communication interface. The communication interface is coupled to the processor. The processor is configured to run a program or instructions to implement the processes of the sidelink transmission method embodiments described above, and the same technical effects can be achieved. Details are not described herein again to avoid repetition.

It should be understood that the chip referred to embodiments of this application may also be referred to as a system-on-a-chip, or the like.

Embodiments of this application further provide a computer program/program product stored in a storage medium. The computer program/program product is executed by at least one processor to implement the processes of the sidelink transmission method embodiments, and the same technical effects can be achieved. To avoid repetition, details are not described herein again.

An embodiment of this application further provides a transmission determining system, including: a plurality of terminals operable to perform the steps of the sidelink transmission method as described above.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Moreover, it should be noted that the scope of the methods and apparatus of embodiments of this application is not limited to performing functions in the order shown or discussed, but may include performing functions in a substantially concurrent manner or in reverse order depending on the functionality involved, for example, the methods described may be performed in an order different from that described, and various steps may also be added, omitted, or combined. In addition, features described in some examples may also be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal device (which may be a mobile phone, a computer, a server, a network device, or the like) to perform the methods described in the embodiments of the present invention.

Embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1.   A sidelink transmission method, comprising:

   listening, by a terminal, for a first resource, to obtain a corresponding listening result; and
   determining, based on the listening result, whether to perform sidelink transmission, wherein
   the first resource comprises an interlace, and the interlace comprises at least one of the following:

      an interlace determined based on a sidelink bandwidth part SL-BWP,
      an interlace determined based on a carrier, or
      an interlace determined based on at least one resource block set RB set.

2.   The method according to claim 1, wherein the interlace determined based on the SL-BWP comprises:
   an interlace in at least one interlace obtained by performing interlacing on the entire SL-BWP.

3.   The method according to claim 1, wherein the interlace determined based on the carrier comprises:
   an interlace in at least one interlace obtained by performing interlacing on the entire carrier.

4.   The method according to claim 1, wherein the interlace determined based on the at least one RB set comprises:
   an interlace in at least one interlace obtained by performing interlacing on the at least one RB set.

5.   The method according to any one of claims 1 to 4, wherein the first resource is at least one sub-channel, wherein each sub-channel comprises at least one interlace; or
   the first resource is at least one resource pool, wherein each resource pool comprises at least one interlace.

6.   The method according to claim 5, wherein a size of a sub-channel in the at least one sub-channel is determined by at least one of the following:

      a number of interlaces comprised in the sub-channel; or
      a physical resource block PRB comprised in each interlace.

7.   The method according to claim 5, wherein each sub-channel comprises an integer number of RB sets in frequency domain;

and/or

an index of the at least one sub-channel is determined by at least one of the following:

a number of RB sets corresponding to one interlace, a total number of interlaces obtained by performing interlacing, a number of consecutive RB sets comprised in the sub-channel, and a number of consecutive interlaces comprised in the sub-channel.

8. The method according to claim 7, wherein an index of the sub-channel, an index of an RB set, and an index of the interlace satisfy the following relationship:

$$\text{sub} - \text{channel } l = 0, 1, 2, \dots \left( \frac{I}{K} \times \frac{M}{N} \right) - 1$$

$$\text{RB set index } i = \left\lfloor \frac{l}{M/N} \right\rfloor \times K + k, \qquad i = 0, \dots . I - 1, k = 0, \dots, K - 1$$

$$\text{interlace index } m = \text{mod}\left( l, \frac{M}{N} \right) \times N + n, \quad m = \{0, \dots, M - 1\}, n = \{0, \dots, N - 1\}$$

wherein, sub - channel $l$ represents the index of the sub-channel $l$, I is the number of RB sets corresponding to the one interlace, M is the total number of interlaces obtained by performing interlacing, and each sub-channel $l$ comprises K consecutive RB sets and N consecutive interlaces.

9. The method according to claim 5, wherein when the first resource is the at least one sub-channel, sidelink control information SCI transmitted by the terminal indicates at least one of the following:

    an available RB set of the at least one sub-channel; or
    an RB set used by the terminal in the at least one sub-channel.

10. The method according to claim 5, wherein when the first resource is the at least one sub-channel, the resource pool comprises the at least one sub-channel.

11. The method according to claim 5, wherein when the first resource is the at least one resource pool, SCI transmitted by the terminal indicates at least one of the following:

    an available RB set of the at least one resource pool;
    an interlace index allocated for the terminal; or
    an RB set used by the terminal in the at least one resource pool.

12. The method according to claim 5, wherein each resource pool comprises an integer number of RB sets in frequency domain.

13. A sidelink transmission apparatus, comprising:

    a listening module, configured to listen for a first resource, to obtain a corresponding listening result; and
    a determining module, configured to determine, based on the listening result, whether to perform sidelink transmission, wherein
    the first resource comprises an interlace interlace, and the interlace comprises at least one of the following:

        an interlace determined based on a sidelink bandwidth part SL-BWP,
        an interlace determined based on a carrier, or
        an interlace determined based on at least one resource block set RB set.

14. The apparatus according to claim 13, wherein the interlace determined based on the sidelink bandwidth part SL-BWP comprises:
an interlace in at least one interlace obtained by performing interlacing on the entire SL-BWP.

15. The apparatus according to claim 13, wherein the interlace determined based on the carrier comprises:
an interlace in at least one interlace obtained by performing interlacing on the entire carrier.

16. The apparatus according to claim 13, wherein the interlace determined based on the at least one RB set comprises:
an interlace in at least one interlace obtained by performing interlacing on the at least one RB set.

17. The apparatus according to any one of claims 13 to 16, wherein the first resource is at least one sub-channel, wherein each sub-channel comprises at least one interlace; or
the first resource is at least one resource pool, wherein each resource pool comprises the at least one interlace.

18. A terminal, comprising a processor and a memory, wherein the memory stores a program or instructions that can be run on the processor; and when the program or instructions are executed by the processor, the steps of the transmission determining method according to any one of claims 1 to 12 are implemented.

19. A readable storage medium, storing a program or instructions; and when the program or the instructions are executed by a processor, the steps of the transmission determining method according to any one of claims 1 to 12 are implemented.

20. A chip, comprising a processor and a communication interface, wherein the communication interface is coupled to the processor, and the processor is configured to run a program or instructions to implement the steps of the transmission determining method according to any one of claims 1 to 12.

21. A computer program product, stored in a storage medium, wherein the computer program product is executed by at least one processor to implement the steps of the transmission determining method according to any one of claims 1 to 12.

Network side
device

Terminal

Terminal

FIG. 1

Start

A terminal listens for a first resource, to obtain a
corresponding listening result — 201

Determine, based on the listening result, whether to
perform sidelink transmission — 202

End

FIG. 2

FIG. 3

FIG. 4

FIG. 5

Interlace 0 on an RB set 1 and an
RB set 2

Interlace 1 on an RB set 1 and an
RB set 2

SL BWP

RB set 2

RB set 1

RB set 0

Interlace 0 on an RB set 0

Interlace 1 on an RB set 0

## FIG. 6

700

Listening module — 701

Determining
module — 702

Sidelink transmission
apparatus

## FIG. 7

800

Communication device

801 ⌒ Processor ⟷ Memory ⌒ 802

## FIG. 8

900

| 901 ⌁ Radio frequency unit | | Network module ⌁ 902 |

910

| 909 ⌁ | Memory<br>Application program<br>Operating system | |
| 908 ⌁ | Interface unit | |

Processor

| 907 ⌁ | User input unit | |
| 9071 ⌁ | Touch panel | |
| 9072 ⌁ | Another input device | |

Audio output unit ⌁ 903

904
Input unit
Graphics processor ⌁ 9041
Microphone ⌁ 9042

906
Display unit
Display panel ⌁ 9061

Sensor ⌁ 905

## FIG. 9

## INTERNATIONAL SEARCH REPORT

International application No.

**PCT/CN2023/073600**

**A. CLASSIFICATION OF SUBJECT MATTER**

H04W 72/04(2023.01)i;H04W 92/18(2009.01)i;H04L5/00(2006.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXT, ENTXTC, WPABSC, 3GPP: 侧链, 侧向链路, 侧向通信, 侧行链路, 侧行通信, 旁链路, 旁路, 副链路, 直连, 侦听, 监测, 监控, 监听, 资源, 块, 交错, 交织, 复用, 共享, 带宽部分, SL, sidelink, monitor, resource, block, interlace, multiplex, share, BWP

**C. DOCUMENTS CONSIDERED TO BE RELEVANT**

| Category* | Citation of document, with indication, where appropriate, of the relevant passages | Relevant to claim No. |
|---|---|---|
| X | WO 2021237654 A1 (QUALCOMM INC. et al.) 02 December 2021 (2021-12-02) description, paragraphs [0044]-[0167], and figures 1-16 | 1-21 |
| X | WO 2021086883 A1 (QUALCOMM INCORPORATED) 06 May 2021 (2021-05-06) description, paragraphs [0031]-[0135], and figures 1-13 | 1-21 |
| X | US 2021092783 A1 (QUALCOMM INCORPORATED) 25 March 2021 (2021-03-25) description, paragraphs [0034]-[0178], and figures 1-13 | 1-21 |
| A | US 2021091901 A1 (QUALCOMM INCORPORATED) 25 March 2021 (2021-03-25) entire document | 1-21 |
| A | WO 2021189428 A1 (LENOVO BEIJING LTD.) 30 September 2021 (2021-09-30) entire document | 1-21 |
| A | SAMSUNG. "R1-1912462 "On Synchronization Mechanisms for NR V2X"" *3GPP tsg_ran\wg1_rl1*, No. tsgr1_99, 09 November 2019 (2019-11-09), pp. 1-10 | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 April 2023** | **28 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" align="center">**INTERNATIONAL SEARCH REPORT**<br>**Information on patent family members**</td><td colspan="2">International application No.<br><br>**PCT/CN2023/073600**</td></tr>
</table>

| Patent document<br>cited in search report | Publication date<br>(day/month/year) | Patent family member(s) | | Publication date<br>(day/month/year) |
|---|---|---|---|---|
| WO 2021237654 A1 | 02 December 2021 | BR 112022023285 | A2 | 20 December 2022 |
| | | KR 20230017770 | A | 06 February 2023 |
| | | TW 202203687 | A | 16 January 2022 |
| | | EP 4158969 | A1 | 05 April 2023 |
| WO 2021086883 A1 | 06 May 2021 | None | | |
| US 2021092783 A1 | 25 March 2021 | EP 4035468 | A1 | 03 August 2022 |
| | | WO 2021061880 | A1 | 01 April 2021 |
| US 2021091901 A1 | 25 March 2021 | WO 2021055648 | A1 | 25 March 2021 |
| | | EP 4032356 | A1 | 27 July 2022 |
| WO 2021189428 A1 | 30 September 2021 | EP 4128958 | A1 | 08 February 2023 |
| | | KR 20220159995 | A | 05 December 2022 |

Form PCT/ISA/210 (patent family annex) (July 2022)

**REFERENCES CITED IN THE DESCRIPTION**

**Patent documents cited in the description**

- CN 202210106500